# EUROPEAN PATENT APPLICATION

(11) **EP 4 576 537 A1**
(43) Date of publication of application: **25.06.2025**
(21) Application number: 24221470.8
(22) Date of filing: 19.12.2024
(51) Int. Cl.: H02M 3/00, H02M 3/335, H02M 1/00

(54) **PHASE-SHIFT CONTROL CIRCUIT AND PHASE-SHIFT CONTROL METHOD FOR LLC CIRCUIT**

(30) Priority: 19.12.2023 CN 202311757000
(71) Applicant: Solax Power Network Technology (Zhejiang) Co., Ltd., Hangzhou, Zhejiang 311500 (CN)
(72) Inventor: LI, Yanlong, Hangzhou, 311500 (CN); ZHANG, Yifan, Hangzhou, 311500 (CN); WANG, Hua, Hangzhou, 311500 (CN); ZHAI, Guangping, Hangzhou, 311500 (CN)
(74) Representative: Murgitroyd & Company

(57) **Abstract**

A phase-shift control circuit and a phase-shift control method for an LLC circuit are provided. The phase-shift control circuit includes: a sampling module, configured to obtain a voltage of a switch transistor of the LLC circuit and a resonant current; a logical operation module, configured to obtain a phase difference between the voltage of the switch transistor and the resonant current; and a control module, configured to: transmit a control signal to control terminals of the switch transistors of the LLC circuit, and control phase shift to be performed on a lagging bridge switch transistor of the LLC circuit; and adjust, in response to that a time value corresponding to the phase difference is less than a first target value, a phase-shift angle of the lagging bridge switch transistor until the time value corresponding to the phase difference is greater than or equal to the first target value, where the first target value is a difference between a sampling delay of the resonant current and a sampling delay of the voltage of the switch transistor. In the present application, hard switching of the lagging bridge switch transistor in the LLC circuit can be avoided, to avoid generation of a reverse recovery loss of a body diode, thereby improving working efficiency of the LLC circuit, reducing stress of the switch transistor, reducing a loss of the switch transistor, and improving a service life of the LLC circuit.

## Description

### TECHNICAL FIELD

The present application relates to the technical field of control of LLC circuits, and specifically, to a phase-shift control circuit and a phase-shift control method for an LLC circuit.

### BACKGROUND

Currently, LLC resonant converters, namely LLC circuits, are current mainstream power topologies. Compared with other converters, the LLC resonant converters have advantages of high efficiency, a small volume, and large power density, and therefore the LLC resonant converters are widely applied.

In related technologies, to increase a gain range of the LLC circuit, a phase-shift technology is used for the LLC circuit. That is, a phase of a switch transistor in the LLC circuit is adjusted based on a frequency. However, in practical applications, a phase-shift angle of the LLC circuit may be excessively large when adjusting the phase of the switch transistor based on the frequency, so that the LLC circuit may work in a capacitive region, causing hard switching of a lagging bridge switch transistor of the LLC circuit. As a result, a reverse recovery loss of a body diode is generated, thereby affecting working efficiency of the LLC circuit. In addition, a stress of the switch transistor is increased, which causes a loss of the switch transistor, thereby shortening a service life of the LLC circuit.

### SUMMARY

In view of this, the present application provides a phase-shift control circuit and a phase-shift control method for an LLC circuit, to improve working efficiency of the LLC circuit, reduce stress of a switch transistor, and improve a service life of the LLC circuit. Technical solutions of the present application are described as follows.

A first aspect of the present application provides a phase-shift control circuit. The phase-shift control circuit is applied to an LLC circuit. The phase-shift control circuit includes a sampling module, a logical operation module, and a control module. The sampling module is connected to a resonant cavity of the LLC circuit. The logical operation module is connected to the sampling module. The control module is connected to the logical operation module and control terminals of switch transistors of the LLC circuit. The sampling module is configured to collect a voltage of the switch transistor of the LLC circuit and a resonant current. The logical operation module is configured to obtain a phase difference between the voltage of the switch transistor and the resonant current. The control module is configured to: transmit a control signal to the control terminals of the switch transistors of the LLC circuit, where the control signal is used to control the LLC circuit to work and control phase shift to be performed on a lagging bridge switch transistor of the LLC circuit; and adjust, in response to that a time value corresponding to the phase difference is less than a first target value, the control signal to adjust a phase-shift angle of the lagging bridge switch transistor until the time value corresponding to the phase difference is greater than or equal to the first target value, where the first target value is a difference between a sampling delay of the resonant current and a sampling delay of the voltage of the switch transistor.

In an embodiment of the present application, the control module is further configured to: adjust, in response to that the time value corresponding to the phase difference is not equal to a second target value, the control signal to adjust the phase-shift angle of the lagging bridge switch transistor until the time value corresponding to the phase difference is equal to the second target value, where the second target value is greater than the first target value.

In an embodiment of the present application, the second target value is a sum of the first target value and an inductive region time value of the lagging bridge switch transistor, and the inductive region time value is obtained based on a minimum shutdown current of the lagging bridge switch transistor and a preset current margin.

In an embodiment of the present application, the sampling module includes a voltage sampling unit and a current sampling unit, and the voltage sampling unit and the current sampling unit are separately connected to the resonant cavity of the LLC circuit; the voltage sampling unit is configured to collect the voltage of the switch transistor; and the current sampling unit is configured to collect the resonant current.

In an embodiment of the present application, the voltage sampling unit includes a first resistor, a second resistor, and a first operational amplifier. A first terminal of the first resistor is connected to the resonant cavity of the LLC circuit, and a second terminal of the first resistor is connected to a positive terminal of the first operational amplifier. A first terminal of the second resistor is connected to the positive terminal of the first operational amplifier, and a second terminal of the second resistor is grounded. A negative terminal of the first operational amplifier is used for receiving a power supply voltage, and an output terminal of the first operational amplifier is connected to the logical operation module.

In an embodiment of the present application, the current sampling unit includes a current transformer, a third resistor, and a second operational amplifier. The current transformer is disposed in the resonant cavity of the LLC circuit, and is configured to generate an induced current based on the resonant current. A positive terminal of the second operational amplifier is connected to a first terminal of the current transformer, and a negative terminal of the second operational amplifier is connected to a second terminal of the current transformer. The third resistor is connected in parallel to the current transformer. An output terminal of the second operational amplifier is connected to the logical operation module.

In an embodiment of the present application, the logical operation module includes a flip detection unit, a zero-crossing detection unit, and an exclusive OR gate operation unit. The flip detection unit and the zero-crossing detection unit are separately connected to the exclusive OR gate operation unit. The flip detection unit is configured to: receive the voltage of the switch transistor, perform flip detection on the voltage of the switch transistor, and obtain a voltage zero-crossing waveform of the voltage of the switch transistor. The zero-crossing detection unit is configured to: receive the resonant current, perform zero-crossing detection on the resonant current, and obtain a current zero-crossing waveform of the resonant current. The exclusive OR gate operation unit is configured to obtain, based on the voltage zero-crossing waveform and the current zero-crossing waveform, the time value corresponding to the phase difference.

In an embodiment of the present application, the control module includes a phase shift unit and a driving unit. The phase shift unit is connected to the logical operation module and the driving unit. The driving unit is connected to the control terminals of the switch transistors of the LLC circuit. The driving unit is configured to transmit the control signal to the control terminals of the switch transistors of the LLC circuit, to control the LLC circuit to work. The phase shift unit is configured to: control the driving unit to adjust the control signal, to perform phase shift on the lagging bridge switch transistor; and control, in response to that the time value corresponding to the phase difference is less than the first target value, the driving unit to adjust the control signal, to adjust the phase-shift angle of the lagging bridge switch transistor until the time value corresponding to the phase difference is greater than or equal to the first target value.

A second aspect of the present application provides a phase-shift control method for an LLC circuit, including: transmitting a control signal to control terminals of switch transistors of the LLC circuit, where the control signal is used to control the LLC circuit to work and control phase shift to be performed on a lagging bridge switch transistor of the LLC circuit; collecting a voltage of the switch transistor of the LLC circuit and a resonant current; obtaining a phase difference between the voltage of the switch transistor and the resonant current; and adjusting, in response to that a time value corresponding to the phase difference is less than a first target value, the control signal to adjust a phase-shift angle of the lagging bridge switch transistor until the time value corresponding to the phase difference is greater than or equal to the first target value, where the first target value is a difference between a sampling delay of the resonant current and a sampling delay of the voltage of the switch transistor.

In an embodiment of the present application, the phase-shift control method further includes: adjusting, in response to that the time value corresponding to the phase difference is not equal to a second target value, the control signal to adjust the phase-shift angle of the lagging bridge switch transistor until the time value corresponding to the phase difference is equal to the second target value, where the second target value is greater than the first target value.

In an embodiment of the present application, the second target value is a sum of the first target value and an inductive region time value of the lagging bridge switch transistor, and the inductive region time value is obtained based on a minimum shutdown current of the lagging bridge switch transistor and a preset current margin.

In the present application, after the control module performs phase shift on a switch transistor of the LLC circuit, the phase shift control circuit samples a voltage of the switch transistor of the LLC circuit and a resonant current in real time manner, obtains the phase difference between the voltage of the switch transistor and the resonant current by using the logical operation module, determines a value relationship between the first target value and the time value corresponding to the phase difference, and in a case of determining that the time value corresponding to the phase difference is less than the first target value, determines that the LLC circuit works in a capacitive region and adjusts a phase-shift angle of the switch transistor of the LLC circuit until the phase difference is greater than or equal to the first target value, that is, until the LLC circuit works in an inductive region. Hard switching of the lagging bridge switch transistor in the LLC circuit can be avoided, to avoid generation of a reverse recovery loss of a body diode, thereby improving working efficiency of the LLC circuit, reducing stress of the switch transistor, reducing a loss of the switch transistor, and improving a service life of the LLC circuit.

### BRIEF DESCRIPTION OF THE DRAWINGS

FIG. 1 is a schematic block diagram of a phase-shift control circuit according to an embodiment of the present application.
FIG. 2 is a schematic block diagram of a sampling module according to an embodiment of the present application.
FIG. 3 is a schematic diagram of a circuit of a sampling module according to an embodiment of the present application.
FIG. 4 is a schematic block diagram of a logical operation module according to an embodiment of the present application.
FIG. 5 is a principle diagram of a waveform of a logical operation module according to an embodiment of the present application.
FIG. 6 is a schematic block diagram of a control module according to an embodiment of the present application.
FIG. 7 is a schematic diagram showing impact of sampling delays on a time value corresponding to a phase difference according to an embodiment of the present application.
FIG. 8 is a schematic flowchart of a phase-shift control method for an LLC circuit according to an embodiment of the present application.
FIG. 9 is a schematic flowchart of a phase-shift control method for an LLC circuit according to another embodiment of the present application.

### DETAILED DESCRIPTION OF THE EMBODIMENTS

It should be noted that in embodiments in the present application, "at least one" means one or more, and "a plurality of" means two or more,. "And/Or" describes an association relationship between associated objects and represents that three relationships may exist. For example, A and/or B may represent the following cases: Only A exists, both A and B exist, and only B exists, where A and B may be singular or plural. In the specification, claims, and accompanying drawings of the present application, the terms "first", "second", "third", "fourth", and so on (if existent) are intended to distinguish between similar objects but do not indicate a specific order or sequence.

In addition, it should be noted that the method disclosed in the embodiments of the present application or the method shown in the flowchart includes one or more steps used to implement the method. Without departing from the scope of the claims, execution sequences of the plurality of steps may be interchanged with each other, and some steps may be deleted.

Currently, LLC resonant converters, namely LLC circuits are current mainstream power topologies. Compared with other converters, the LLC resonant converters have advantages of high efficiency, a small volume, and large power density, and therefore the LLC resonant converters are widely applied.

In related technologies, to increase a gain range of the LLC circuit, a phase-shift technology is used for the LLC circuit. That is, a phase of a switch transistor in the LLC circuit is adjusted based on a frequency. However, in practical applications, a phase-shift angle of the LLC circuit may be excessively large when adjusting the phase of the switch transistor based on the frequency, so that the LLC circuit may work in a capacitive region, causing hard switching of a lagging bridge switch transistor of the LLC circuit. As a result, a reverse recovery loss of a body diode is generated, thereby affecting working efficiency of the LLC circuit. In addition, a stress of the switch transistor is increased, which causes a loss of the switch transistor, thereby shortening a service life of the LLC circuit.

The present application provides a phase-shift control circuit and a phase-shift control method for an LLC circuit, to improve working efficiency of the LLC circuit, reduce stress of a switch transistor, and improve a service life of the LLC circuit.

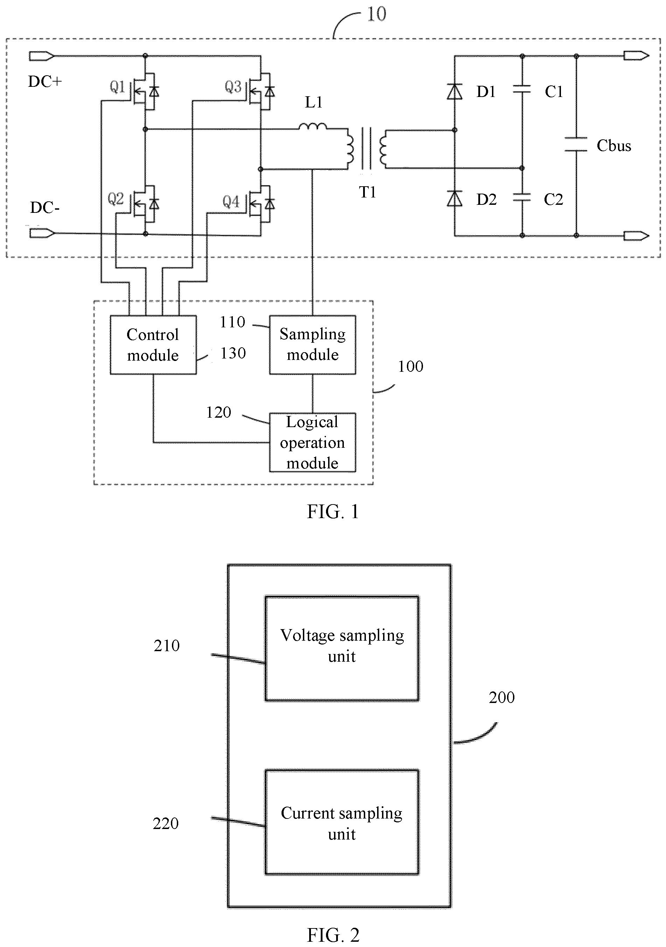

Refer to FIG. 1. FIG. 1 is a schematic block diagram of a phase-shift control circuit according to an embodiment of the present application. The phase-shift control circuit 100 is applied to an LLC circuit. The phase-shift control circuit 100 includes a sampling module 110, a logical operation module 120, and a control module 130.

In an embodiment of the present application, the LLC circuit 10 includes a switch transistor Q1, a switch transistor Q2, a switch transistor Q3, a switch transistor Q4, an inductorL1, a transformer T1, a diode D1, a diode D2, a capacitor C1, a capacitor C2, and a bus capacitor Cbus. A drain of the switch transistor Q1 is connected to a positive input terminal DC+ of the LLC circuit 10, for receiving a power supply voltage. A source of the switch transistor Q1 is connected to a drain of the switch transistor Q2. A source of the switch transistor Q2 is connected to a negative input terminal DC- of the LLC circuit 10, for receiving a power supply voltage. A drain of the switch transistor Q3 is connected to the drain of the switch transistor Q1, and a source of the switch transistor Q3 is connected to a drain of the switch transistor Q4. A source of the switch transistor Q4 is connected to the source of the switch transistor Q2. A first terminal of the inductor L1 is connected to the source of the switch transistor Q1, and a second terminal of the inductor L1 is connected to a first terminal of the transformer T1. A second terminal of the transformer T1 is connected to the drain of the switch transistor Q4, and the first terminal and the second terminal of the transformer T1 are in a same winding.

A cathode of the diode D1 is connected to a positive output terminal O+ of the LLC circuit 10, and an anode of the diode D1 is connected to a cathode of the diode D2. An anode of the diode D2 is connected to a negative output terminal O- of the LLC circuit 10. A first terminal of the capacitor C1 is connected to the positive output terminal O+ of the LLC circuit 10, and a second terminal of the capacitor C1 is connected to a first terminal of the capacitor C2. A second terminal of the capacitor C2 is connected to the negative output terminal O- of the LLC circuit 10. A third terminal of the transformer T1 is connected to the anode of the diode D1, and a fourth terminal of the transformer T1 is connected to the second terminal of the capacitor C1. A first terminal of the bus capacitor Cbus is connected to the positive output terminal O+ of the LLC circuit 10, and a second terminal of the bus capacitor Cbus is connected to the negative output terminal O- of the LLC circuit 10.

The sampling module 110 is connected to a resonant cavity of the LLC circuit 10. The logical operation module 120 is connected to the sampling module 110. The control module 130 is connected to the logical operation module and control terminals of switch transistors of the LLC circuit 10. It may be understood that the foregoing resonant cavity is formed by the switch transistor Q1, the switch transistor Q2, the switch transistor Q3, the switch transistor Q4, the inductor L1, and the transformer T1. The control terminals of the switch transistors are gates of the switch transistor Q1, the switch transistor Q2, the switch transistor Q3, and the switch transistor Q4. In other words, the control module 130 is connected to the gate of the switch transistor Q1, the gate of the switch transistor Q2, the gate of the switch transistor Q3, and the gate of the switch transistor Q4 separately. The switch transistor Q1, the switch transistor Q2, the switch transistor Q3, and the switch transistor Q4 may be metal-oxide-semiconductor (MOS) field-effect transistors.

In an embodiment of the present application, the sampling module 110 is configured to obtain a voltage of the switch transistor of the LLC circuit 10 and a resonant current. After the LLC circuit 10 is started and works, the sampling module 110 may collect a voltage of a lagging bridge switch transistor of the LLC circuit 10 and collect the resonant current of the resonant cavity in a real time manner, and transmit the voltage of the switch transistor and the resonant current to the logical operation module 120. In some embodiments, the sampling module 110 may obtain the voltage of the switch transistor and the resonant current from the transformer T1 at preset time intervals. For example, the sampling module 110 may be connected to the second terminal of the transformer T1, for collecting the voltage of the switch transistor and the resonant current.

The lagging bridge switch transistor refers to a switch transistor that is delayed to be switched on after the LLC circuit 10 is started. For example, the switch transistor Q3 and the switch transistor Q4 in the LLC circuit 10 may serve as lagging bridge switch transistors, and the switch transistor Q1 and the switch transistor Q2 may serve as leading bridge switch transistors. It may be understood that, after the LLC circuit 10 is started and before phase shift is performed, phases of the switch transistor Q1 and the switch transistor Q4 may be the same, phases of the switch transistor Q2 and the switch transistor Q3 may be the same, and the phases of the switch transistor Q1 and the switch transistor Q2 are opposite. In this case, the switch transistor Q3 and the switch transistor Q4 are not delayed to be switched on. In order to increase a gain of the LLC circuit 10, reduce a shutdown current of the lagging bridge switch transistor, reduce a shutdown loss of the LLC circuit 10, and improve shutdown efficiency, phase shift may be controlled to be performed on the lagging bridge switch transistor of the LLC circuit 10. In other words, phase shift are controlled to be performed on the switch transistor Q3 and the switch transistor Q4, so that the switch transistor Q3 is delayed to be switched on relative to the switch transistor Q2, and the switch transistor Q4 is delayed to be switched on relative to the switch transistor Q1.

In embodiments of the present application, the logical operation module 120 is configured to obtain a phase difference between the voltage of the switch transistor and the resonant current. In some embodiments, the logical operation module 120 may obtain a phase of the voltage of the switch transistor through flip detection, obtain a phase of the resonant current through current zero-crossing detection, and finally obtain the phase difference based on the phase of the voltage of the switch transistor and the phase of the resonant current.

In an embodiment of the present application, the control module 130 is configured to: transmit a control signal to the control terminals of the switch transistors of the LLC circuit 10, to control the LLC circuit 10 to work, and control phase shift to be performed on the lagging bridge switch transistor of the LLC circuit 10; and adjust, in response to that a time value corresponding to the phase difference is less than a first target value, the control signal to adjust a phase-shift angle of the lagging bridge switch transistor until the time value corresponding to the phase difference is greater than or equal to the first target value, where the first target value is a difference between a current sampling delay of the resonant current and a voltage sampling delay of the voltage of the switch transistor.

In an embodiment of the present application, the current sampling delay of the resonant current of the sampling module 110 may be detected in advance, and the voltage sampling delay of the voltage of the switch transistor of the sampling module 110 may be detected in advance. Then the foregoing first target value is obtained by subtracting the voltage sampling delay from the current sampling delay, and the first target value is stored in the control module 130 in advance.

It may be understood that, in the present application, after the control module 130 performs phase shift on a switch transistor of the LLC circuit 10, the phase-shift control circuit 100 samples the voltage of the switch transistor of the LLC circuit 10 and the resonant current in a real time manner, obtains a phase difference between the voltage of the switch transistor and the resonant current by using the logical operation module 120, determines a relationship between the first target value and the time value corresponding to the phase difference, and in a case of determining that the time value corresponding to the phase difference is less than the first target value, determines that the LLC circuit 10 works in a capacitive region and adjusts the phase-shift angle of the switch transistor of the LLC circuit 10 until the phase difference is greater than or equal to the first target value, that is, until the LLC circuit 10 works in an inductive region. In this way, hard switching of the lagging bridge switch transistor in the LLC circuit 10 can be avoided, to avoid generation of a reverse recovery loss of a body diode, thereby improving working efficiency of the LLC circuit 10, reducing stress of the switch transistor, reducing a loss of the switch transistor, and improving a service life of the LLC circuit 10.

In some embodiments, the control module 130 is further configured to: adjust, in response to that the time value corresponding to the phase difference is not equal to a second target value, the control signal to adjust the phase-shift angle of the lagging bridge switch transistor until the time value corresponding to the phase difference is equal to the second target value, where the second target value is greater than the first target value.

The second target value is a sum of the first target value and an inductive region time value of the lagging bridge switch transistor. The inductive region time value is obtained based on a minimum shutdown current of the lagging bridge switch transistor and a preset current margin.

It may be understood that the switch transistor in the LLC circuit 10 has a minimum current of soft switching, that is, the foregoing minimum shutdown current. The minimum shutdown current may be obtained by performing a test on the switch transistor in the LLC circuit 10, or performing calculation by using an electrical parameter when the LLC circuit 10 works. Phase shift control for the lagging bridge switch transistor is adjusted, so that the lagging bridge switch transistor is switched off when a current flowing through the lagging bridge switch transistor is close to the minimum shutdown current, thereby improving shutdown efficiency of the LLC circuit 10 and further improving working efficiency of the LLC circuit 10.

In an embodiment of the present application, to achieve soft switching of the switch transistor of the LLC circuit 10, a margin may be set for the minimum shutdown current. For example, an actual minimum shutdown current of the switch transistor is Ioff, and a minimum shutdown current in applications may be set to 1.2 Ioff, where 0.2 Ioff is the foregoing preset current margin.

It may be understood that, in the present application, after the control module 130 performs phase shift on the switch transistor of the LLC circuit 10, the phase-shift control circuit 100 samples the voltage of the switch transistor of the LLC circuit 10 and the resonant current in a real time manner, obtains a phase difference between the voltage of the switch transistor and the resonant current by using the logical operation module 120, determines whether the phase difference is equal to the second target value, and in a case of determining that the phase difference is not equal to the second target value, determines that the LLC circuit 10 does not work at optimal efficiency, and adjusts the phase-shift angle of the switch transistor of the LLC circuit 10 until the phase difference is equal to the second target value. Because the second target value is greater than the first target value, the LLC circuit 10 works in an inductive region. Hard switching of the lagging bridge switch transistor in the LLC circuit 10 can be avoided, to avoid generation of a reverse recovery loss of a body diode, thereby reducing stress of the switch transistor, reducing a loss of the switch transistor, improving a service life of the LLC circuit 10, and further improving working efficiency of the LLC circuit 10. In this way, the LLC circuit 10 works at optimal efficiency.

Refer to FIG. 2. FIG. 2 is a schematic block diagram of a sampling module according to an embodiment of the present application. The sampling module 200 includes a voltage sampling unit 210 and a current sampling unit 220.

In an embodiment of the present application, the voltage sampling unit 210 and the current sampling unit 220 are separately connected to the resonant cavity of the LLC circuit. The voltage sampling unit 210 is configured to collect a voltage of a switch transistor, and the current sampling unit 220 is configured to collect a resonant current.

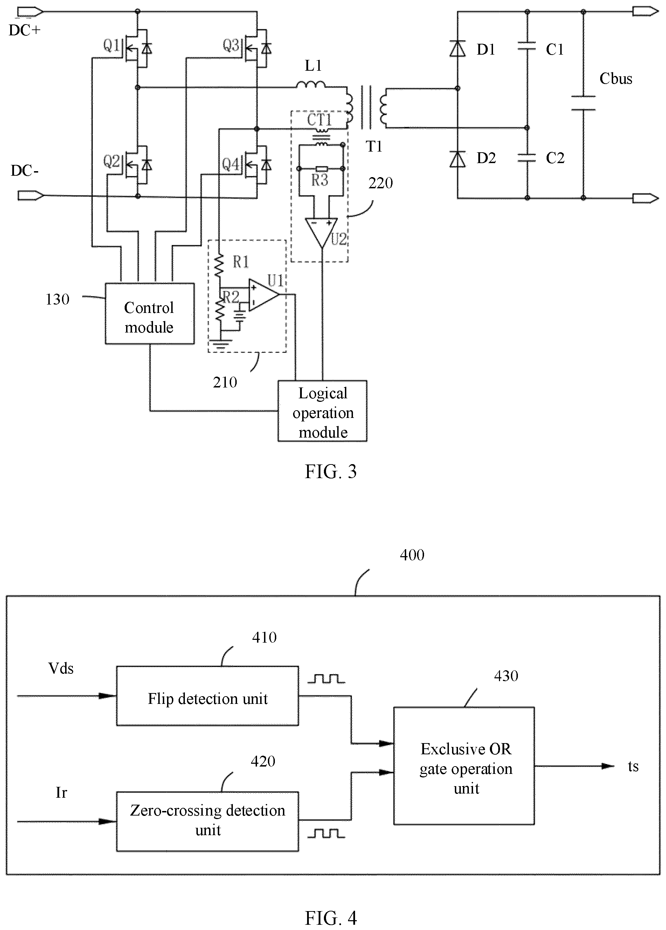

In some embodiments, as shown in FIG. 3, the voltage sampling unit 210 includes a first resistor R1, a second resistor R2, and a first operational amplifier U1. A first terminal of the first resistor R1 is connected to the resonant cavity of the LLC circuit, and a second terminal of the first resistor R1 is connected to a positive terminal of the first operational amplifier U1. A first terminal of the second resistor R2 is connected to a positive terminal of the first operational amplifier U1, and a second terminal of the second resistor R2 is grounded. A negative terminal of the first operational amplifier U1 is used for receiving a power supply voltage, and an output terminal of the first operational amplifier U1 is connected to the logical operation module.

The current sampling unit 220 includes a current transformer CT, a third resistor R3, and a second operational amplifier U2. The current transformer CT is disposed on the resonant cavity of the LLC circuit, for generating an induced current based on a resonant current. A first terminal of the current transformer CT is connected to a positive terminal of the second operational amplifier U2, and a second terminal of the current transformer CT is connected to a negative terminal of the second operational amplifier U2. The third resistor R3 is connected in parallel to the current transformer CT. An output terminal of the second operational amplifier U2 is connected to the logical operation module.

Refer to FIG. 4. FIG. 4 is a schematic block diagram of a logical operation module according to an embodiment of the present application. The logical operation module 400 includes a flip detection unit 410, a zero-crossing detection unit 420, and an exclusive OR gate operation unit 430.

In an embodiment of the present application, the flip detection unit 410 and the zero-crossing detection unit 420 are separately connected to the exclusive OR gate operation unit 430. The flip detection unit 410 is configured to: receive a voltage Vds of a switch transistor, perform flip detection on the voltage Vds of the switch transistor, and obtain a voltage zero-crossing waveform of the voltage of the switch transistor. The zero-crossing detection unit 420 is configured to: receive a resonant current Ir, perform zero-crossing detection on the resonant current Ir, and obtain a current zero-crossing waveform of the resonant current Ir. The exclusive OR gate operation unit 430 is configured to: receive the voltage zero-crossing waveform and the current zero-crossing waveform, and obtain, based on the voltage zero-crossing waveform and the current zero-crossing waveform, a time value ts corresponding to the foregoing phase difference.

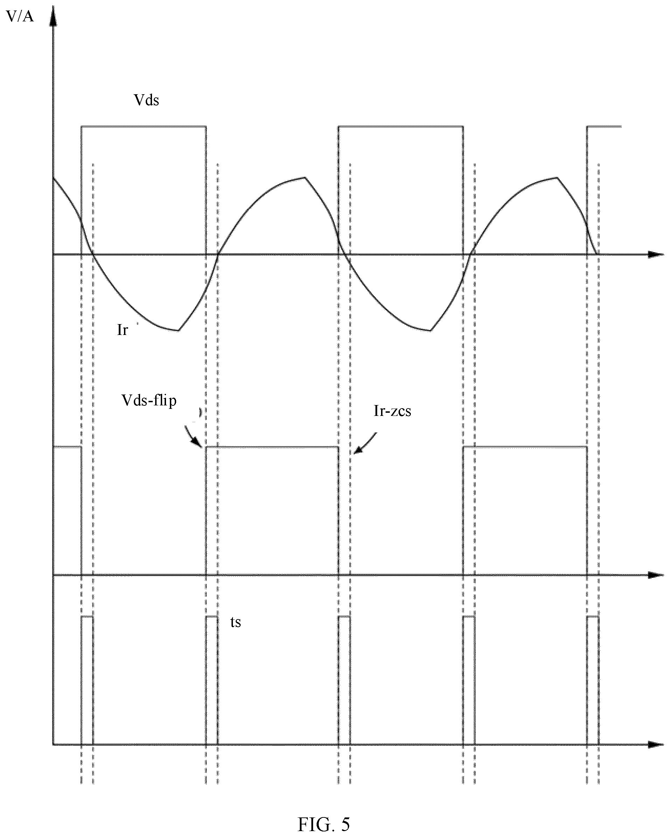

FIG. 5 is a principle diagram of a waveform of the logical operation module. Vds is the voltage of the switch transistor, Ir is the resonant current, Vds-flip is a voltage zero-crossing point, Ir-zcs is a current zero-crossing point, and ts is a time value corresponding to a phase difference.

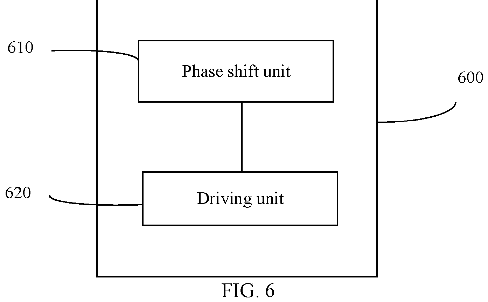

Refer to FIG. 6. FIG. 6 is a schematic block diagram of the control module according to an embodiment of the present application. The control module 600 includes a phase shift unit 610 and a driving unit 620.

In an embodiment of the present application, the phase shift unit 610 is connected to the logical operation module and the driving unit 620, and the driving unit 620 is connected to control terminals of switch transistors of the LLC circuit. The driving unit 620 is configured to transmit a control signal to the control terminals of the switch transistors of the LLC circuit, to control the LLC circuit to work. The phase shift unit 610 is configured to: control the driving unit 620 to adjust the control signal, to perform phase shift on a lagging bridge switch transistor of the LLC circuit; and control, in response to that the time value corresponding to the phase difference is less than the first target value, the driving unit 620 to adjust the control signal, to adjust a phase-shift angle of the lagging bridge switch transistor until the time value corresponding to the phase difference is greater than or equal to the first target value.

In some embodiments, the driving unit 620 is further configured to: adjust, in response to that the time value corresponding to the phase difference is not equal to the second target value, the control signal to adjust the phase-shift angle of the lagging bridge switch transistor until the time value corresponding to the phase difference is equal to the second target value, where the second target value is greater than the first target value.

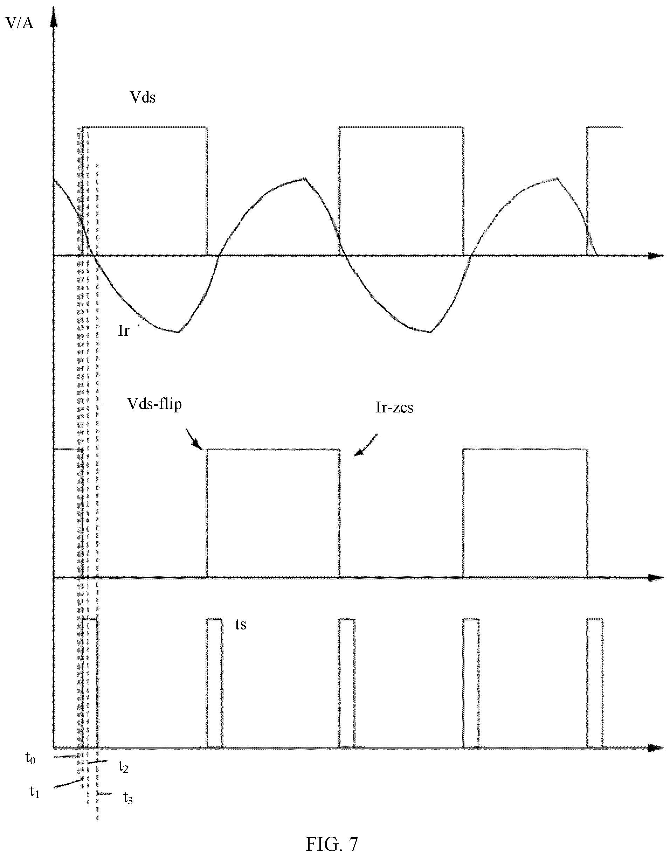

In practical applications, voltage sampling and current sampling each have a sampling delay. For example, the voltage sampling unit in the foregoing embodiment is implemented through voltage division of a resistor, and the current sampling unit is implemented by using a current transformer. It can be understood that the sampling delay of voltage sampling implemented through voltage division of the resistor is relatively low, and the sampling delay of current sampling implemented by using the current transformer is relatively high. FIG. 7 shows impact of the sampling delays on the time value corresponding to the phase difference. Vds is a voltage of the switch transistor, Ir is the resonant current, Vds-flip is a voltage zero-crossing point, Ir-zcs is a current zero-crossing point, ts is the time value corresponding to the phase difference, t0 to t1 is a sampling delay t_{vdelay} of Vds, and t2 to t3 is a sampling delay t_{idelay} of Ir. Therefore, it is not difficult to learn that the time value corresponding to the actual phase difference needs to be corrected based on the sampling delays. A corrected value of the time value is td = t_{idelay} - t_{vdelay}. The corrected value td may serve as the foregoing first target value.

After ts ≥ td is achieved through phase shift, it indicates that the LLC circuit works in the inductive region, but does not necessarily work at optimal efficiency. In order to cause the LLC circuit to work in the inductive region at the optimal efficiency, the time value ts corresponding to the phase difference may be controlled to be equal to the second target value through phase shift, for example, ts = td + ta, where ta is an inductive region time value obtained based on the minimum shutdown current of the lagging bridge switch transistor and the preset current margin.

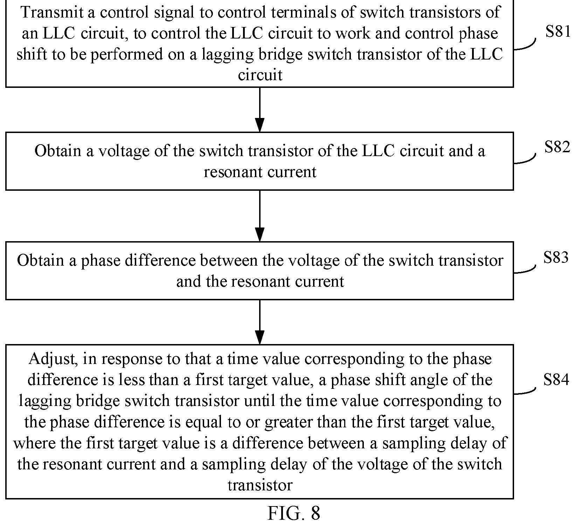

Refer to FIG. 8. FIG. 8 is a schematic flowchart of a phase-shift control method for an LLC circuit according to an embodiment of the present application. The method includes the following steps:

Step S81: A control signal is transmitted to control terminals of switch transistors of the LLC circuit, to control the LLC circuit to work and control phase shift to be performed on a lagging bridge switch transistor of the LLC circuit.

Step S82: A voltage of the switch transistor of the LLC circuit and a resonant current are collected.

Step S83: A phase difference between the voltage of the switch transistor and the resonant current is obtained.

Step S84: In response to that a time value corresponding to the phase difference is less than a first target value, the control signal is adjusted to adjust a phase-shift angle of the lagging bridge switch transistor until the time value corresponding to the phase difference is greater than or equal to the first target value, where the first target value is a difference between a sampling delay of the resonant current and a sampling delay of the voltage of the switch transistor.

It may be understood that for beneficial effects that can be achieved by using the phase-shift control method for an LLC circuit provided in embodiments of the present application, reference may be made to the beneficial effects of the foregoing provided phase-shift control circuit, and details are not described here.

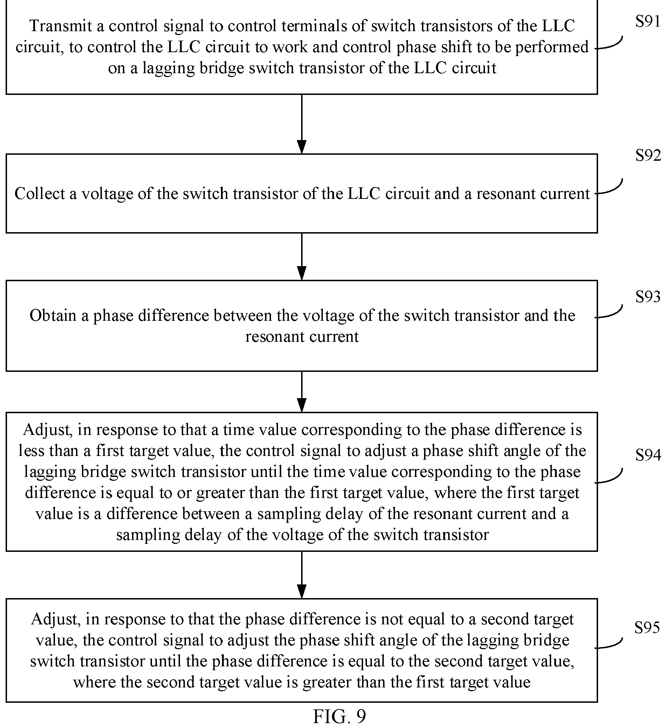

Refer to FIG. 9. FIG. 9 is a schematic flowchart of a phase-shift control method for an LLC circuit according to another embodiment of the present application. The method includes the following steps:

Step S91: A control signal is transmitted to control terminals of switch transistors of the LLC circuit, to control the LLC circuit to work and control phase shift to be performed on a lagging bridge switch transistor of the LLC circuit.

Step S92: A voltage of the switch transistor of the LLC circuit and a resonant current are collected.

Step S93: A phase difference between the voltage of the switch transistor and the resonant current is obtained.

Step S94: In response to that a time value corresponding to the phase difference is less than a first target value, the control signal is adjusted to adjust a phase-shift angle of the lagging bridge switch transistor until the time value corresponding to the phase difference is greater than or equal to the first target value, where the first target value is a difference between a sampling delay of the resonant current and a sampling delay of the voltage of the switch transistor.

Step S95: In response to that the time value corresponding to the phase difference is not equal to a second target value, the control signal is adjusted to adjust the phase-shift angle of the lagging bridge switch transistor until the time value corresponding to the phase difference is equal to the second target value, where the second target value is greater than the first target value.

In an embodiment of the present application, the second target value is a sum of the first target value and an inductive region time value of the lagging bridge switch transistor, and the inductive region time value is obtained based on a minimum shutdown current of the lagging bridge switch transistor and a preset current margin.

It may be understood that for beneficial effects that can be achieved by using the phase-shift control method for an LLC circuit provided in embodiments of the present application, reference may be made to the beneficial effects of the foregoing provided corresponding phase-shift control circuit, and details are not described herein.

An embodiment of the present application further provides a computer storage medium. The computer storage medium stores a computer program. When the computer program is executed by a processor, the processor is enabled to perform the foregoing phase-shift control method for an LLC circuit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer storage medium, or may be transmitted by using the computer storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer storage medium may be any available medium that can be accessed by the computer, or a data storage device such as a server or a data center in which one or more usable media are integrated. The usable medium can be a magnetic medium (for example, a floppy disk, a hard disk, or a magnetic tape), an optical medium (for example, a digital versatile disc (DVD)), a semiconductor medium (for example, a solid-state drive (SSD)), or the like.

A person of ordinary skill in the art can understand that all or some of the procedures of the method in the embodiments may be implemented by a computer program instructing related hardware. The program may be stored in a computer-readable storage medium. When the program is executed, the procedures of the method embodiments are performed. The foregoing storage medium includes any medium that can store program code, like a ROM, a RAM, a magnetic disk, or an optical disc. The technical features in the embodiments and the solutions can be randomly combined in a case of no conflict.

The previous embodiments are merely intended for describing the preferred embodiments of the present application other than limiting the scope of the present application. Various variations and improvements made by a person of ordinary skill in the art to the technical solutions of the present application without departing from the idea of the present application should fall within the protection scope determined by the appended claims of the present application.

## Claims

1. A phase-shift control circuit (100), wherein the phase-shift control circuit (100) is applied to an LLC circuit and comprises a sampling module (110), a logical operation module (120), and a control module (130), wherein the sampling module (110) is connected to a resonant cavity of the LLC circuit, the logical operation module (120) is connected to the sampling module (110), and the control module (130) is connected to the logical operation module (120) and control terminals of switch transistors of the LLC circuit;
the sampling module (110) is configured to collect a voltage of the switch transistor of the LLC circuit and a resonant current;
the logical operation module (120) is configured to obtain a phase difference between the voltage of the switch transistor and the resonant current; and
the control module (130) is configured to:
transmit a control signal to the control terminals of the switch transistors of the LLC circuit, wherein the control signal is used to control the LLC circuit to work and control phase shift to be performed on a lagging bridge switch transistor of the LLC circuit; and
adjust, in response to that a time value corresponding to the phase difference is less than a first target value, the control signal to adjust a phase-shift angle of the lagging bridge switch transistor until the time value corresponding to the phase difference is greater than or equal to the first target value, wherein the first target value is a difference between a sampling delay of the resonant current and a sampling delay of the voltage of the switch transistor.

2. The phase-shift control circuit (100) according to claim 1, wherein the control module (130) is further configured to:
adjust, in response to that the time value corresponding to the phase difference is not equal to a second target value, the control signal to adjust the phase-shift angle of the lagging bridge switch transistor until the time value corresponding to the phase difference is equal to the second target value, wherein the second target value is greater than the first target value.

3. The phase-shift control circuit (100) according to claim 2, wherein the second target value is a sum of the first target value and an inductive region time value of the lagging bridge switch transistor, and the inductive region time value is obtained based on a minimum shutdown current of the lagging bridge switch transistor and a preset current margin.

4. The phase-shift control circuit (100) according to claim 1, wherein the sampling module (110) comprises a voltage sampling unit (210) and a current sampling unit (220), and the voltage sampling unit (210) and the current sampling unit (220) are separately connected to the resonant cavity of the LLC circuit;
the voltage sampling unit (210) is configured to collect the voltage of the switch transistor; and
the current sampling unit (220) is configured to collect the resonant current.

5. The phase-shift control circuit (100) according to claim 4, wherein the voltage sampling unit (210) comprises a first resistor, a second resistor, and a first operational amplifier; and
a first terminal of the first resistor is connected to the resonant cavity of the LLC circuit, and a second terminal of the first resistor is connected to a positive terminal of the first operational amplifier; a first terminal of the second resistor is connected to the positive terminal of the first operational amplifier, and a second terminal of the second resistor is grounded; and a negative terminal of the first operational amplifier is used for receiving a power supply voltage, and an output terminal of the first operational amplifier is connected to the logical operation module (120).

6. The phase-shift control circuit (100) according to claim 4, wherein the current sampling unit (220) comprises a current transformer, a third resistor, and a second operational amplifier; and
the current transformer is disposed in the resonant cavity of the LLC circuit, and is configured to generate an induced current based on the resonant current; a positive terminal of the second operational amplifier is connected to a first terminal of the current transformer, and a negative terminal of the second operational amplifier is connected to a second terminal of the current transformer; the third resistor is connected in parallel to the current transformer; and an output terminal of the second operational amplifier is connected to the logical operation module (120).

7. The phase-shift control circuit (100) according to claim 1, wherein the logical operation module (120) comprises a flip detection unit (410), a zero-crossing detection unit (420), and an exclusive OR gate operation unit (430), and the flip detection unit (410) and the zero-crossing detection unit (420) are separately connected to the exclusive OR gate operation unit (430);
the flip detection unit (410) is configured to: receive the voltage of the switch transistor, perform flip detection on the voltage of the switch transistor, and obtain a voltage zero-crossing waveform of the voltage of the switch transistor;
the zero-crossing detection unit (420) is configured to: receive the resonant current, perform zero-crossing detection on the resonant current, and obtain a current zero-crossing waveform of the resonant current; and
the exclusive OR gate operation unit (430) is configured to obtain, based on the voltage zero-crossing waveform and the current zero-crossing waveform, the time value corresponding to the phase difference.

8. The phase-shift control circuit (100) according to claim 1, wherein the control module (130) comprises a phase shift unit and a driving unit, the phase shift unit is connected to the logical operation module (120) and the driving unit, and the driving unit is connected to the control terminals of the switch transistors of the LLC circuit; and
the driving unit is configured to:
transmit the control signal to the control terminals of the switch transistors of the LLC circuit, to control the LLC circuit to work; and
the phase shift unit is configured to:
control the driving unit to adjust the control signal, to perform phase shift on the lagging bridge switch transistor; and
control, in response to that the time value corresponding to the phase difference is less than the first target value, the driving unit to adjust the control signal, to adjust the phase-shift angle of the lagging bridge switch transistor until the time value corresponding to the phase difference is greater than or equal to the first target value.

9. A phase-shift control method for an LLC circuit, comprising:
transmitting (S81) a control signal to control terminals of switch transistors of the LLC circuit, wherein the control signal is used to control the LLC circuit to work and control phase shift to be performed on a lagging bridge switch transistor of the LLC circuit;
collecting (S82) a voltage of the switch transistor of the LLC circuit and a resonant current;
obtaining (S83) a phase difference between the voltage of the switch transistor and the resonant current; and
adjusting (S84), in response to that a time value corresponding to the phase difference is less than a first target value, the control signal to adjust a phase-shift angle of the lagging bridge switch transistor until the time value corresponding to the phase difference is greater than or equal to the first target value, wherein the first target value is a difference between a sampling delay of the resonant current and a sampling delay of the voltage of the switch transistor.

10. The phase-shift control method of the LLC circuit according to claim 9, wherein the phase-shift control method further comprises:
adjusting (S95), in response to that the time value corresponding to the phase difference is not equal to a second target value, the control signal to adjust the phase-shift angle of the lagging bridge switch transistor until the time value corresponding to the phase difference is equal to the second target value, wherein the second target value is greater than the first target value.
